(19) Europäisches Patentamt

European Patent Office

Office européen des brevets

(11) EP 0 969 104 A1

(12) EUROPÄISCHE PATENTANMELDUNG

(43) Veröffentlichungstag:
05.01.2000 Patentblatt 2000/01

(51) Int Cl.⁷: **C21B 3/08**, B01J 2/04

(21) Anmeldenummer: 99890207.6

(22) Anmeldetag: 25.06.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.06.1998  AT  113098**

(71) Anmelder: **"HOLDERBANK" Financière Glarus AG**
**8750 Glarus (CH)**

(72) Erfinder: **Edlinger, Alfred Dipl. Ing.**
**5400 Baden (CH)**

(74) Vertreter: **Haffner, Thomas M., Dr.**
**Patentanwalt,**
**Haffner, Thomas M., Dr.,**
**Schottengasse 3a**
**1014 Wien (AT)**

(54) **Verfahren und Vorrichtung zum Granulieren und Zerkleinern von flüssigen Schlacken**

(57) Bei einem Verfahren zum Granulieren und Zerkleinern von flüssigen Schlacken insbesondere metalloxidhaltigen Schlacken werden in die Schlacke bzw. den Schlackenstrahl Kohle, Kohlenwasserstoffe, Kohlendioxid ($CO_2$) und/oder Kohle-Wassergemische bzw. Kohleschlämme eingestoßen. Die flüssige Schlacke wird in einen Expansions- und Granulierraum (4) sowie anschließend in eine Mühle, insbesondere eine Strahl- oder Prallmühle (8) übergeführt. Bei der mit einem Schlacken-Tundish (1) und einer koaxial zur Achse des Tundish-Rohres angeordenten Lanze (5) versehenen Vorrichtung zur Durchführung des Verfahrens ist das Tundish-Rohr als Loch-Düse ausgebildet. Radial außerhalb der Mündung (3) des Tundish-Rohres sind Einrichtungen (6) zum Aufbringen von Kohlenstoffträgern und/oder Wasserdüsen angeordnet.

FIG. 1

EP 0 969 104 A1

**Beschreibung**

Die Erfindung bezieht sich auf ein Verfahren zum Granulieren und Zerkleinern von flüssigen Schlacken insbesondere metalloxidhaltigen Schlacken wie z. B. Konverterschlacken oder Müllverbrennungsschlacken, Gemischen von Stahl- und Hochofenschlacken oder nichteisenmetallurgischen Schlacken, z.B. Cu- oder Ni-Schlacken sowie eine Vorrichtung zur Durchführung dieses Verfahrens.

In einer älteren Entwicklung der Anmelderin (GM 94/98) wurde bereits ein Verfahren zum Granulieren und Zerkleinern von flüssigen Schlacken vorgeschlagen, bei welchem insbesondere für die Zerkleinerung von flüssigen Hochofenschlacken Druckwasser in die Schlackenschmelze eingestoßen wurde und die Schlacke als Mantel des Druckwasserstrahles in einen Mahlraum verbracht wurde. Mit diesem Verfahren wurde unmittelbar die direkte Umwandlung der inneren Energie und insbesondere der fühlbaren Wärme von Schlackenschmelzen in Mahlarbeiten ausgenutzt, wobei es allerdings bei dem älteren Vorschlag, bei welchem lediglich Wasser unter Hochdruck eingestoßen wurde, zu einer Reihe von Beschränkungen in Bezug auf die Auswahl der zu granulierenden und zerkleinernden Schlacken kam. Grundsätzlich eignete sich das ältere Verfahren in erster Linie für die Zerkleinerung von Hochofenschlacken mit nur geringen Anteilen an Metallen bzw. an im Zuge der Granulation entstehenden metallischen Partikeln. Während zu granulierende Hochofenschlacke in der Regel einen geringen Rest-Roheisengehalt aufweist, welcher bei korrekter Verfahrensführung unter 0,5 Gew.% liegt, haben insbesondere metalloxid- oder eisenoxidhältige Schlacken wie Konverterschlacken wesentlich höhere Anteile an Restroheisen bzw. leicht reduzierbaren Eisenoxiden, welche in Verbindung mit Wasser als Granulationsmedium die Gefahr einer Explosion durch Wasserstoffgasbildung zur Folge hätten. Bei dem älteren Verfahren wurde daher aus diesem Grunde vorgeschlagen, zur Erhöhung der Sicherheit die flüssigen Schlacken durch Einbringen von Sauerstoff restlos zu oxidieren und zur Verbesserung der Zerkleinerungswirkung mit Gasen zu sättigen.

Basierend auf diesem Prinzip der Schlackenmikrogranulation, welche durch schlagartige Expansion der Wasserseele bzw. der in der Schlacke gelösten Gase ein hohes Maß an rascher Zerkleinerung erzielen ließ, dient nun die vorliegende Erfindung dazu, den Anwendungsbereich des Verfahrensprinzips auf beliebige Schlacken und insbesondere auf metalloxidhaltige Schlacken, wie beispielsweise Konverterschlacken oder Müllverbrennungsschlacken zu erweitern, ohne das Risiko von Knallgasexplosionen auf sich zu nehmen. Das erfindungsgemäße Verfahren eignet sich insbesondere für hochbasische Schlacken, welche eine starke Tendenz zur Entglasung aufweisen, bei welchen eine besonders rasche Abkühlung erforderlich ist, um die Glasstruktur aufrechtzuerhalten und soll auch für saure Systeme, z.B. fayalithische Schlackenschmelzen, anwendbar sein.

Zur Lösung der erfindungsgemäßen Aufgabe besteht das erfindungsgemäße Verfahren im wesentlichen darin, daß die flüssige Schlacke in einen Expansions- bzw. Granulierraum ausgestoßen wird, daß in die flüssige Schlacke bzw. den Schlackenstrahl Kohle, Kohlenwasserstoffe, $CO_2$-hältige Gase und/oder Kohle-Wassergemische bzw. Kohleschlämme eingestoßen und zumindest teilweise zu CO und $H_2$ umgesetzt werden, wobei die Schlackentröpfchen reduziert und gekühlt werden und daß das Staubgemisch aus Klinkerstaub bzw. Schlackenstaub und Metallstaub voneinander, beispielsweise durch Magnetscheidung, getrennt wird. Dadurch, daß nun anstelle von reinem Wasser Kohlenwasserstoffe oder Kohle-Wassergemische zum Einsatz gelangen, wird eine stark reduzierende Atmosphäre geschaffen, wobei die energetischen Vorteile des bekannten Verfahrens unverändert aufrecht erhalten bleiben. Im Falle der Verwendung von Hochdruckschweröl bzw. Dieselöl oder Altlösungsmitteln kommt es bei der Hochtemperaturumsetzung mit der flüssigen Schlacke zu einer raschen Dissoziation bzw. zu einem Cracken der eingesetzten Kohlenwasserstoffe, wodurch sich eine besonders rasche Abkühlung der Flüssigschlacke ergibt. Insgesamt findet hierbei eine pyrolytische Zersetzung der Kohlenwasserstoffe statt, welche gleichzeitig eine zumindest teilweise Schlackenreduktion ergibt. Auch bei Verwendung von Kohle-Wassergemischen in $CO_2$ suspendiertem Kohlenstaub bzw. Kohleschlämmen überwiegt der reduzierende Anteil, welcher durch den Kohlegehalt gewährleistet wird, um die Gefahr von Explosionen sicher hintanzuhalten. Die beim Einpressen von Kohleschlämmen gebildete reduzierende Atmosphäre erlaubt es gleichfalls, Metalloxide aus metalloxidhaltigen Schlacken zu reduzieren. Im Fall von Hochdruckkohlenwasserstoffen, wie beispielsweise Schwerölen od.dgl., kann durch zusätzliches Einbringen von Sauerstoff und/oder Wasser Kohlenmonoxid gebildet werden, wobei insgesamt immer noch eine reduzierende Atmosphäre verbleibt.

Die Vergasungsreaktion in der Crack/Vergasungs-Kammer wirkt quasi als Brennkammer und das gebildete Treibgas (C+$H_2$O->CO+$H_2$) beschleunigt das Schlackengranulat, wobei eine Zugabe von Wasser in einer derartigen Vergasungsbrennkammer, bei welcher lediglich eine Teilverbrennung erfolgt, unmittelbar die Ausbildung von Synthesegas bzw. Wassergas erlaubt. Gleichzeitig mit einer raschen Abkühlung und Desintegration unter Ausbildung besonders feinkörniger Feststoffe kann somit eine Schlackenreduktion vorgenommen werden und gebildeter Metallstaub abgetrennt werden.

Mit Vorteil wird das erfindungsgemäße Verfahren so durchgeführt, daß Kohlenwasserstoffe in Form eines Strahles aus Schwerölen, Dieselölen oder Altlösungsmitteln unter einem Druck von über 15 bar, insbesondere 30 bis 260 bar eingesetzt werden, wobei alternativ oder gleichzeitig mit Vorteil Hochdruckwasser gemeinsam mit Kohlestaub oder Kohlenwasserstoffen in die flüssige Schlacke eingestoßen wird.

Besonders vorteilhaft ist hier eine Verfahrensweise, bei welcher Wasserdampf oder $CO_2$ unter einem Druck von 3 bis 30 bar koaxial zur Mündung des Schlackenaustrittes eingestoßen wird und daß der Schlackenstrahl nach dem Verlassen der Mündung mit Kohlenstoffträgern, insbesondere Kohle und Druckwasser, oder in $CO_2$ fluidisierter Kohlenstaub beaufschlagt wird. Bei einer solchen Verfahrensweise wirken hohe Scherkräfte auf den Schlackenstrahl, ohne daß eine nennenswerte Abkühlung durch den Dampf erfolgt, wobei die nachträgliche Aufgabe von Kohlenstoff die gewünschte Vergasung und die gewünschte rasche Erstarrung durch das aufgebrachte Druckwasser ergibt.

Wie bereits erwähnt, kann durch zusätzliches Sauerstoff-, $CO_2$- und/oder Wassereinbringen Kohlenmonoxid gebildet werden, wobei hierfür bevorzugt so vorgegangen wird, daß der Schlackenstrahl mit $O_2$, $CO_2$ und/oder $H_2O$ zur Ausbildung von CO bzw. CO+$H_2$ beaufschlagt wird und die granulierte Schlacke gemeinsam mit dem gebildeten CO bzw. Spaltgas in den Mahlraum einer Strahl- oder Prallmühle eingebracht wird. $CO_2$ setzt sich hiebei mit C zu CO um.

Eine besonders gute Zerkleinerung und ein wertvolles Endprodukt läßt sich dadurch erzielen, daß die Schlacken auf eine Basizität (CaO/$SiO_2$) zwischen 0,2 und 3,8, insbesondere 2,8 bis 3,6 eingestellt bzw. mit dieser Basizität eingesetzt werden.

Zur Verbesserung des thermischen Wirkungsgrades kann der Ausstoß der flüssigen Schlacken mit heißen Verbrennungsabgasen erfolgen, wobei bevorzugt überhitzter Wasserdampf mit Temperaturen von über 1200° C, insbesondere 1450° C, zum Zerstäuben der flüssigen Schlacken eingesetzt wird.

Bevorzugt wird hiebei die Reduktion der zerstäubten Schlacken bei Temperaturen von 600° bis 1600° C in der Wirbelschicht vorgenommen.

Mit Rücksicht auf den entstehenden Metallstaub werden bevorzugt die gekühlten Stäube unter inerter Atmosphäre auf unter 100° C abgekühlt, wobei für die Reduktion bevorzugt Kohlenstoff in einer Menge von 250 bis 300 kg/t Schlacke in den Kühlraum eingebracht wird.

Eine besonders bevorzugte Vorrichtung zur Durchführung des Verfahrens mit einem Schlacken-Tundish und einer koaxial zur Achse des Tundish-Rohres angeordneten Lanze ist, daß das Tundish-Rohr als Loch-Düse ausgebildet ist und daß radial außerhalb der Mündung des Tundish-Rohres Einrichtungen zum Aufbringen von Kohlenstoffträgern und/oder Wasserdüsen angeordnet sind. Erforderlichenfalls kann das zerkleinerte Produkt in der Folge noch konventionell vermahlen werden.

Insgesamt gelingt es durch die erfindungsgemäße Verfahrensführung, den Wasserverbrauch beim Granulieren von flüssigen Schlacken wesentlich herabzusetzen oder bei Einsatz von $CO_2$/C zu eliminieren und gleichzeitig Reduktionsarbeit zu leisten.

Die Erfindung wird nachfolgend anhand einer in der Zeichnung schematisch dargestellten Einrichtung zur Durchführung des Verfahrens sowie anhand eines Ausführungsbeispieles näher erläutert. In dieser zeigen Fig. 1 eine schematische Darstellung einer ersten Ausführungsform einer für die Durchführung des erfindungsgemäßen Verfahrens geeigneten Einrichtung, Fig. 2 eine abgewandelte Ausführung für den Einstoß von Kohle-Wassergemischen, Fig. 3 ein Detail des Schlackeneinlaufes für die Aufgabe von fluidisiertem Kohlepulver auf die Schlacke und Fig. 4 eine abgewandelte Ausbildung zum Einstoßen von Dampf in die flüssige Schlacke.

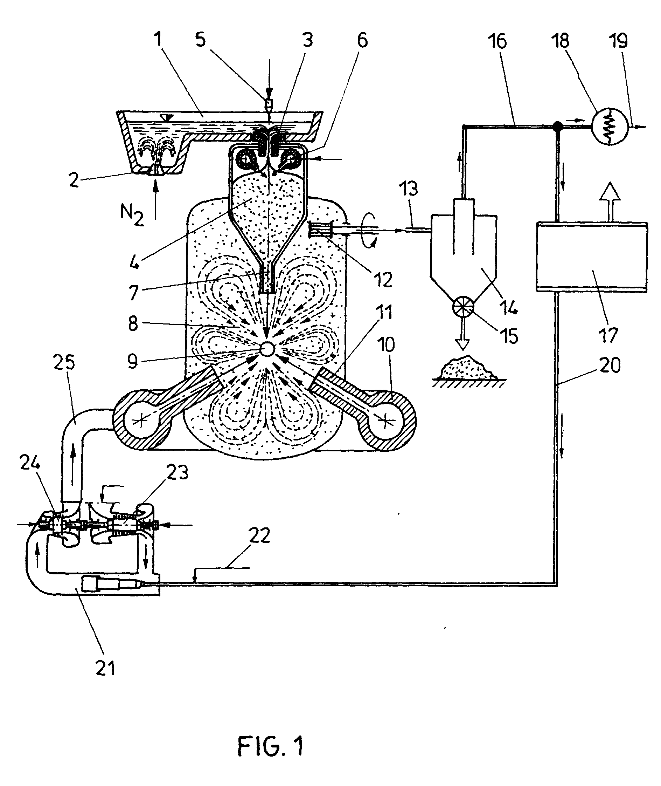

In Fig. 1 ist mit 1 ein Schlacken-Tundish bezeichnet, in welchem flüssige Schlacke vorgelegt wird. An der tiefsten Stelle des Schlacken-Tundish wird über ein Spülstein 2 Inertgas eingebracht, sofern dies gewünscht wird. Die Sättigung der Schlacke mit Gasen hat Vorteile bei der nachfolgenden Desintegration, da das in der Schlacke enthaltene Gas bei der Abkühlung zu einer schlagartigen Expansion und damit zu einer intensiven Zerkleinerung beiträgt.

Die flüssige Schlacke gelangt über einen Schlackenauslauf 3 in eine nachfolgende Expansionskammer 4. Oberhalb des Schlackenauslaufes 3 ist eine Lanze 5 angeordnet, über welche koaxial zur Öffnung des Schlackenauslaufes 3 Drucköl unter einem Druck von 15 bis 160 bar in das Schlackenbad eingestoßen wird. Die flüssige Schlacke gelangt in der Folge als Mantel eines derartigen Drucköstrahles in die Expansionskammer 4, wobei aufgrund der Temperatur der flüssigen Schlacke eine thermische Zersetzung und ein Cracken des Drucköles einsetzt. Die Zersetzungsenthalpie führt hiebei zu einer raschen Abkühlung und damit zu einem raschen Granulieren der flüssigen Schlacke, wobei zusätzlich über Ringdüsen 6 Wasser und/oder Sauerstoff und/oder $CO_2$-hältiges Abgas als Sauerstoffträger, in die Expansionskammer eingedüst wird. Gemeinsam mit dem bei der Zersetzung des Drucköles entstehenden Kohlenstoff erfolgt hier eine Umsetzung zu Kohlenmonoxid und mit Rücksicht auf den Wasserstoffgehalt von Schwerölen zu Wasserstoff, wobei die Zusammensetzung des Spaltgases durch Einsatz von Wasser weiter variiert werden kann.

Die granulierten und weitestgehend abgekühlten Schlackenteilchen gelangen in fester Form über die Austrittsöffnung 7 der Zersetzungs- bzw. Expansionskammer 4 in eine nachgeschaltete Gegenstromstrahlmühle 8, deren zentrale Mahlzone bzw. deren Mahlpunkt mit 9 bezeichnet ist. Auf diesen Mahlpunkt sind Druckgasstrahlen aus einer Ringleitung 10 über entsprechende Düsen 11 gerichtet, sodaß eine intensive mechanische Kollision der Partikel und damit ein hoher Mahleffekt gewährleistet ist.

Das weitestgehend zerkleinerte Produkt wird über einen Sichter 12 abgezogen und gelangt über eine Leitung 13 in einen Staubabscheider 14, welcher als Zyklon ausgebildet ist. Das abgeschiedene Feingut wird über eine Schleuse 15 ausgetragen und enthält neben zerkleinertem Klinkerstaub, bei entsprechend reduzierenden Bedingungen unter reduzierbaren Schlacken, auch Metallstaubanteile, welche in der Folge durch geeignete Maßnahmen, wie beispielsweise eine Magnetscheidung oder eine Sichtung abgetrennt werden können.

Das weitestgehend gereinigte Gas, welches als Synthesegas mit hohem Anteil an Kohlenmonoxid und Wasserstoff vorliegt, gelangt über die Leitung 16 in eine Gasturbine 17, in welcher der Druck des Synthesegases erhöht wird. Ein Teil des Synthesegases und insbesondere Überschußgas kann hiebei als Exportgas nach einer thermischen Nutzung in einem Wärmetauscher 18 über die Leitung 19 abgezogen werden.

Das verdichtete Synthesegas gelangt über die Leitung 20 zu einer Brennkammer 21, in welche über die Leitung 22 Abwässer zudosiert werden können. In der Brennkammer erfolgt eine Verbrennung des Synthesegases unter Zufuhr von Druckluft, wofür ein Luftkompressor 23 vorgesehen ist. Der Luftkompressor 23 kann selbst wiederum über eine Abgasturbine 24 angetrieben werden, über welche die Verbrennungsabgase geleitet werden. Diese Verbrennungsabgase werden in der Folge über die Leitung 25 der Ringleitung 10 und damit den Düsen 11 für die Gegenstromstrahlmühle zugeführt.

Bei dieser Ausbildung wird die hohe Dissoziations- bzw. Crackenergie von Druckölen, insbesondere von Altölen oder verbrauchten industriellen Lösungsmitteln zur raschen Abkühlung und damit zur glasartigen Erstarrung der Schlacke genützt.

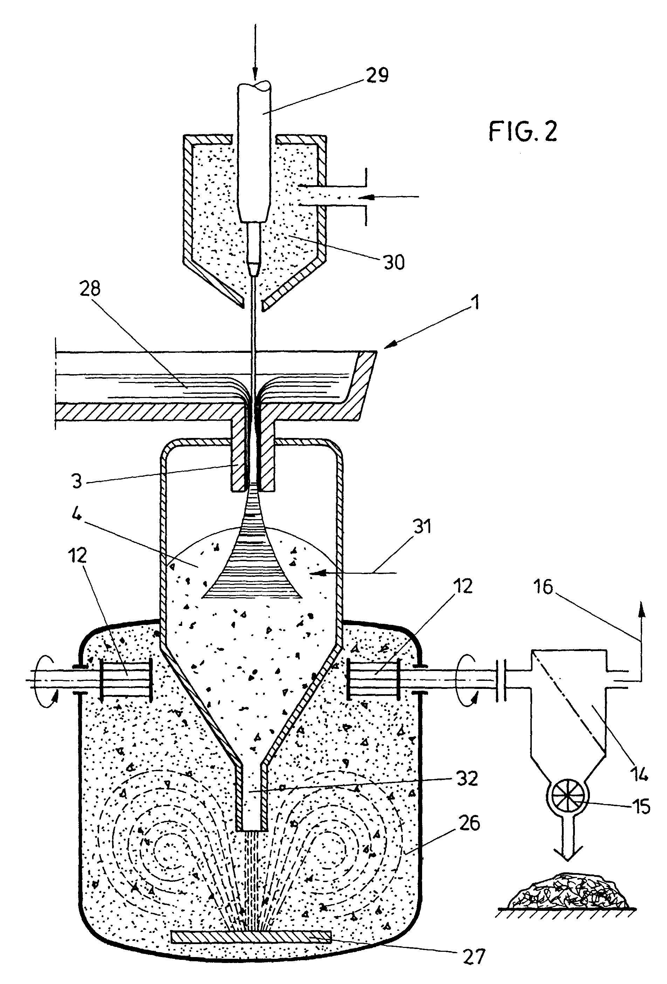

Bei der Ausbildung nach Fig. 2 wird anstelle einer Gegenstromstrahlmühle eine Prallmühle 26 eingesetzt. Die die Expansions-bzw. Zersetzungskammer 4 verlassenden erstarrten Partikel werden gegen eine Prallpanzerplatte 27 geschleudert und auf diese Weise zerkleinert.

Abweichend von der Ausbildung nach Fig. 1 wird nunmehr in die Schlackenschmelze 28 im Schlakken-Tundish 1 Kohlestaub gemeinsam mit Hochdruckwasser eingestoßen. Zu diesem Zweck ist eine Hochdruckwasserlanze 29 vorgesehen, über welche nach dem Injektorprinzip Kohlestaub aus einer Injektorkammer 30 angesaugt wird. Der Strahl ist wiederum koaxial zum Schlackenaustritt 3 orientiert, wobei in der Folge in der Expansionskammer eine weitestgehende Verbrennung des eingebrachten Kohlenstoffes erfolgt. Durch geeignete Zufuhr von Sauerstoff und/oder Wasser über eine Leitung 31 kann die Zusammensetzung des entstehenden Verbrennungsabgases im Anschluß an die Schlackenvergasung geregelt werden. Neben Synthesegas kann durch eine entsprechende Nachverbrennung mit Sauerstoff hier $CO_2$ und Wasserdampf gebildet werden, sodaß die für die nachfolgende Zerkleinerung erforderliche Beschleunigungsenergie bereitgestellt werden kann.

Der Austritt aus der Brennkammer bzw. Expansionskammer 4 kann hiebei als mehrphasige Beschleunigungsdüse 32 ausgebildet sein. Das zerkleinerte Material wird wiederum über Sichter 12 und eine nachfolgende Entstaubungseinrichtung 14 ausgetragen, wobei die Schleuse 15 beispielsweise als Unterdruckschleuse ausgebildet sein kann.

Aus der Entstaubungsanlage können wiederum heiße Verbrennungsabgase über die Leitung 16 abgezogen werden und entsprechend weiter verwendet werden.

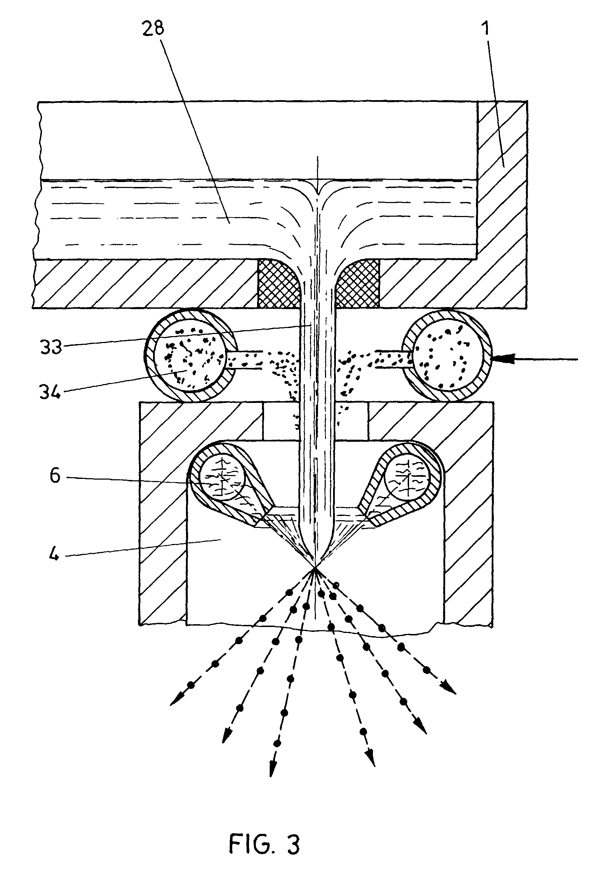

Bei der Ausbildung nach Fig. 3, welche nunmehr lediglich Details des Schlackeneinlaufes darstellt, ist wiederum der Schlacken-Tundish 1 ersichtlich, in welchem die flüssige Schlackenschmelze 28 vorliegt. Die Schlacke verläßt den Tundish in Form eines Schlakkenstrahles 33, wobei auf diesen Schlackenstrahl über eine Ringdüse 34 fluidisiertes Kohlepulver, welches beispielsweise mit Wasserdampf oder $CO_2$ fluidisiert wurde, aufgebracht wird. Die Mantelfläche des Schlackenstrahles wirkt auf diese Weise reduzierend, sodaß die nachfolgende Umsetzung mit Wasser gefahrlos ohne die Gefahr einer Knallgasbildung erfolgen kann. Am Eingang der Expansions- bzw. Brennkammer 4 sind wiederum Ringdüsen 6 für die Zufuhr von Hochdruckwasser angeordnet, welche einen Hochdruckwasserkegel ausbilden. Mittels dieses Wasserkegels wird der Schlackenstrahl zerteilt und aufgrund der raschen Abkühlung in kleine Partikel unter Wassergasbildung zerlegt. Derartiges Wassergas bzw. Synthesegas besteht wiederum weitestgehend aus Kohlenmonoxid und Wasserstoff und kann in der in Fig. 1 näher beschriebenen Weise im Rahmen der erfindungsgemäßen Gegenstromstrahlmühle eingesetzt werden.

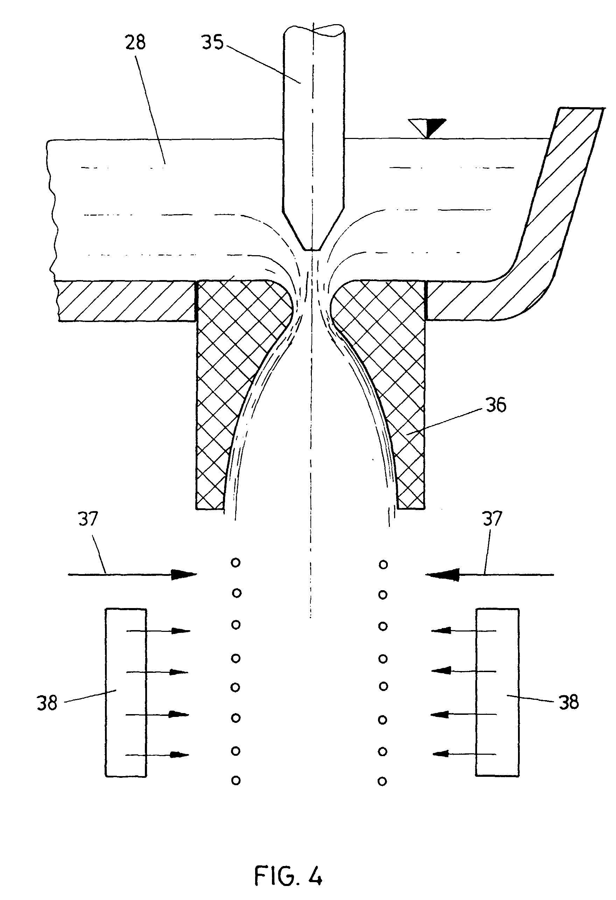

Bei der besonders bevorzugten Ausbildung nach Fig. 4 wird über eine Druckdampflanze 35 Wasserdampf unter einem Druck von etwa 15 bar in die Schlacke koaxial zum Tundish-Rohr 36 eingetragen. Der Hochdruckwasserdampf wird hiebei von einem Mantel aus flüssiger Schlacke umhüllt, wobei zwischen dem Schlacken- und dem Dampfstrom eine überaus große Differenz in der Strömungsgeschwindigkeit entsteht. Die dadurch auftretenden hohen Scherkräfte zerreisen den Schlackenstrahl in überaus feine Schlackentröpfchen, wobei das Tundish-Rohr als Laval-Düse ausgebildet ist und Dampfströmungsgeschwindigkeiten im Überschallbereich beobachtet werden. Zwischen Schlackenstrahl und Wasserdampf findet praktisch kein Wärmeaustausch statt, wobei der Wasserdampf den Schlackenstrahl beschleunigt. Die hohen Beschleunigungskräfte ergeben bei der gegebenen Oberflächenspannung der Schlackenschmelze feinste Schlackentröpfchen im Bereich von etwa 50 bis 350 µm. Die auf diese Weise ausgebildete überaus große Oberfläche dieser Schlackentröpfchen kann in der Folge mit Wassernebel und/oder Kohlenstoff in überaus raschen Wärme- und Stoffaustausch umgesetzt werden, wobei der Hochdruckdampf in erster Linie der Überwindung des Gegendruckes und dem Impulsaustausch Treibdampf/ Schlacke der Vergasungskammer dient. Da ein Wärmeaustausch zwischen Hochdruckdampf und Schlackenschmelze nicht stattfindet, wird auch das Risiko eines Einfrierens der Schlacke im Tundish-Rohr wesentlich herabgesetzt.

Unmittelbar nach dem Verlassen des Tundish-Rohres 36 kann auf die feinsten Schlackentröpfchen über eine Reihe von Öffnungen 37 Kohlestaub aufgebracht werden, wobei der Wassernebel in einem Sprühkasten hergestellt wird, welcher schematisch mit 38 bezeichnet ist. In diesem Sprühkasten werden bei Wasserdrucken von beispielsweise 2 bis 8 bar feinste Wassertröpfchen gebildet, welche eine rasche Abkühlung und Erstarrung der feinen Schlackenpartikel und eine rasche Vergasung des eingebrachten Kohlestaubes zur Folge hat. Das Treibdampf-Strahlrohr (Dampfdruck etwa 15 bar) wird zur Tundish-Düse koaxial in die Schlackenschmelze positioniert. Beispielsweise werden 150 kg Dampf pro t Schlacke eingeblasen. Zwischen Treibampf und Schmelze finden kein Wärmeaustausch statt. In der überkritischen Loch-Düse expandiert der Treibstrahl gegen 5 bar auf Überschallgeschwindigkeit. Durch den Injektor-Effekt wird Schlackenschmelze in die Tundish-Düse eingezogen. (wenn das System nach unten gerichtet ist. Natürlich ist auch ein aufwärts gerichtetes System denkbar.)

Es treten sehr hohe Relativgeschwindigkeiten zwischen dem mit Überschall expandierenden Dampfstrahl und den Schlackentröpfchen auf. Dies führt zu sehr großen Scherkräften. Aufgrund von Oberflächenspannung- und Viskositätsverhältnissen der Schlackenschmelze sollten die sehr hohen Scherkräfte zur Bildung von Schlackentröpfchen im Mikrometer-Bereich ausreichend sein.

Diese Schlackentröpfchen werden nach Austritt aus der Loch-Düse mittels Wasser(-Nebel) Verdampfung und/oder Wassergasbildung (C+$H_2$O+Schlackenwärme CO+$H_2$) sehr rasch abgekühlt, wobei sehr große Energie- und Stoff-Flussdichten aufgrund extremer Oberflächen-Verhältnisse erreicht werden.

Die Erfindung wird nachfolgend anhand von Ausführungsbeispielen näher erläutert:

Beispiel 1:

1 t Schlackenschmelze beinhaltet bei 1500° C eine innere Energie (Wärme) von 2250 KJ/kg. Die Schlackentemperatur wurde durch den Granuliervorgang von 1500° C auf 500° C abgesenkt. Dies bedeutet die Abfuhr von 1500 KJ/kg Schlacke. Um die Wärmemenge abzuführen, müssen daher pro t Schlacke 150 kg Kohle zu Wassergas umgewandelt werden. Dazu werden 225 kg Wasser pro t Schlacke benötigt und es entstehen 345 kg CO sowie 25,5 kg $H_2$, also insgesamt ca. 370 kg entsprechend 296 Nm³ Wassergas oder 840 m³ (bei 500° C) (93 Gew.% CO und 7 Gew.% $H_2$).

Unter der Annahme, daß die Schlacke keine reduzierenden Bestandteile aufweist, beispielsweise im Falle von Hochofenschlacke, ergibt sich durch die Verbrennung dieser 370 kg Wassergas eine Energiemenge von 3700 MJ oder ca. 1000 KWh. Zur Feinmahlung der Schlacke werden aber maximal 200 KWh/t Schlacke benötigt.

Um den Prozeß energetisch auszubalancieren, können z.B. Klinker zugemahlen werden. Die spezifische Wassermenge kann aber auch erhöht und der Kohlenstaubanteil erniedrigt werden, sodaß ein Gas entsteht, welches energetisch gesehen genau dem Mahlaufwand entspricht.

Dieses Gas wird beispielsweise direkt in einer Brennkammer in das Treibgas umgewandelt.

Um 1 t Schlackenschmelze von 1500° C auf 500° C abzukühlen, werden maximal 150 kg Kohle und minimal 225 kg Wasser benötigt.

Aus diesen Überlegungen erfolgt überschlägig extrapoliert:

Bei angenommenen 200 KWh/t Schlacke-Mahlarbeitsbedarf (entsprechend der "chemisch gebundenen Gas-Energie") ergibt sich der Bedarf

- an Kohle von 30 kg/t Schlacke
- an Wasser von 718 kg/t Schlacke.

Diese Angaben (Kohle/Wasser) sind somit auf den spezifischen Mahlarbeitsbedarf von 200 KWh/t Schlacke abgestimmt. Der Energieinhalt des Wasserdampfes, der hoch ist, ist dabei noch gar nicht berücksichtigt.

Das Kohleeinbringen kann nun entweder in Form von Kohlenwasserstoffen oder gemeinsamem Einbringen von Kohlenwasserstoffen oder Kohlestaub mit Hochdruckwasser erfolgen. Für die Verwendung von Hochdruckkohlenwasserstoffstrahlen, beispielsweise in Form von Butan, ergeben sich folgende Überlegungen:

Wenn pro t Schlacke 150 kg Butan aufgeblasen werden, senkt sich die Schlackentemperatur von 1500° C auf 1282° C ab und es entstehen 124,5 kg Kohlenstoff sowie 25,5 kg Wasserstoff.

Die Vergasung von 124,5 kg Kohlenstoff benötigt 1,245 MJ an thermischer Energie aus der Schlackenschmelze.

Die Schlackenschmelze weist bei 1282° C einen Energieinhalt von 1,867 MJ/t auf bei einer spezifischen Wärme cp = 1,5 KJ/kg·K. Nach obiger Wassergasreaktion hat die Schlacke einen Energieinhalt von nur noch 1,867 MJ (Pyrolyse) - 1,245 MJ (aus Wassergas-Bildung) = 622 MJ/kg Schlacke.

Daraus errechnet sich eine Schlackenendtemperatur von 427° C.

Zur Vergasung der 124,5 kg des gebildeten Pyrolyse-Kohlenstoffes werden 186,75 kg Wasser benötigt.

Zur Granulierung von 1 t Schlackenschmelze benötigt man somit 150 kg Butan und 187 kg Wasser, um die Schlackentemperatur von 1500° C auf 427° C abzusenken. Dabei entstehen 25,5 kg Pyrolyse-Wasserstoff + 21,16 kg Wassergas-Wasserstoff, insgesamt 47,1 kg Wasserstoff, sowie 286,4 kg CO.

Insgesamt entstehen pro t Schlacke somit 333,5 kg Spaltgas.

Das gebildete Spaltgas hat dann folgende Zusammensetzung:

14,12 Gew.% Wasserstoff und
85,59 Gew.% Kohlenmonoxid.

Dieses Spaltgas kann anschließend zur Direktreduktion und Treibgaserzeugung für eine Strahlmühle herangezogen werden.

Eine weitere kostengünstige Variation der Schlackenenergienutzung gelingt dadurch, daß dem Hochdruckwasserstrahl Kohlepulver aufgegeben wird. Eine derartige Kohlestaub-Wasser-Suspension kann ebenso eingebracht werden, wobei im Anschluß an einen Mahlvorgang unter reduzierenden Bedingungen ein überschüssiges Spaltgas, und insbesondere ein $CO/H_2$-Gemisch verbleibt. Ein derartiges überschüssiges $CO/H_2$-Gemisch könnte unmittelbar einer nachfolgenden "Fischer-Tropsch-Synthese" unterworfen werden. Die "Fischer-Tropsch-Synthese" benötigt metallisches Eisen oder Kobalt als Katalysator. Bei Verwendung von eisenoxidhaltigen Schlacken wird unter den reduzierenden Bedingungen unmittelbar Eisenstaub gebildet, wobei die "Fischer-Tropsch-Synthese" in der Folge hochwertige Kohlenwasserstoffe zu synthetisieren erlaubt. Insbesondere gelingt es hierbei, längerkettige Kohlenwasserstoffe wie Benzin zu synthetisieren.

Die Direktreduktion während des Mahlvorganges führt gleichzeitig zu einer vorteilhaften Aufkohlung des gebildeten Eisenpulvers bzw. Eisenschwammes durch die Zugabe oder die Bildung von Kohlenwasserstoffen. Aufgekohltes, direkt reduziertes Eisen zeichnet sich gegenüber konventionellem, in der Direktreduktion gebildeten Eisenschwamm dadurch aus, daß es nicht mehr pyrophor ist.

Beispiel 2:

Als Einsatzstoffe wurde Hochofenschlacke (HOS), Stahlschlacke (SS), Bauxit und Eisenerz mit nachfolgender Zusammensetzung verwendet:

| HOS | |
|---|---|
| Komponente | (%) |
| Cao | 36 |
| MgO | 10 |
| $SiO_2$ | 43 |
| $Al_2O_3$ | 8 |

(fortgesetzt)

| HOS | |
|---|---|
| Komponente | (%) |
| S | 2 |
| $CaO/SiO_2 = 0,84$ | |

| SS | |
|---|---|
| Komponente | (%) |
| Cao | 52 |
| MgO | 2 |
| $SiO_2$ | 14 |
| $Al_2O_3$ | 1 |
| FeO | 28 |
| $Cr_2O_3$ | 0,1 |
| $P_2O_5$ | 2,5 |
| $CaO/SiO_2 = 3,71$ | |

| Bauxit | |
|---|---|
| $Al_2O_3$ | 95 % |

| Eisenerz | |
|---|---|
| $Fe_2O_3$ | 91 % |

Um eine hochwertige "Zement-Schlacke" zu erhalten, wird eine Zielbasizität ($CaO/SiO_2$) von 1,3 und ein $Al_2O_3$-Gehalt von 12 % angestrebt. Das bedeutet, daß 1,7 Gewichtsteile HOS mit 1 Gewichtsteil SS im flüssigen Zustand unter exothermer Reaktion miteinander gemischt werden müssen. Die Schlackenmischung setzt sich daher zusammen aus 63 Gew.% HOS und 37 Gew.% SS mit nachfolgender Richtanalyse der Mischschlacke (MS):

| MS | |
|---|---|
| Komponente | (%) |
| Cao | 41,92 |
| MgO | 7,04 |
| $SiO_2$ | 32,27 |
| $Al_2O_3$ | 5,41 |
| S | 1,26 |
| FeO | 10,36 |
| $Cr_2O_3$ | 0,037 |
| $P_2O_5$ | 0,925 |
| $CaO/SiO_2 = 1,3$ | |

Diese Mischschlacke wird mit Bauxit versetzt, sodaß die reduzierte Endschlacke den gewünschten

$Al_2O_3$-Gehalt von 12 % aufweist.

Aus reduktionsökonomischen Gründen kann die Zugabe von Eisenerz ($Fe_2O_3$) sehr sinnvol werden, um das entstehende Reduktionsgas ($CO+H_2$) auszunutzen. Außerdem reduziert die Zugabe von Eisenerz die dynamische Schmelz-Viskosität sowie Oberflächenspannung ganz erheblich, sodaß das anschließende Schlacken-Versprühen in den "Reduktions-Granulierraum" zu extrem feinem Micro-Granulat führt.

In einer Brennkammer (Cyclone) wird durch Verbrennung von C-Heißgas ($CO_2$) hergestellt, die Asche des Kohlenstaubes gemeinsam mit den Additiven Bauxit und Eisenerz geschmolzen und als Additiv-Schmelze gemeinsam mit dem Heißgas in ein verlängertes Tundish-Auslaufrohr gestossen. In der Brennkammer herrscht ein Überdruck von maximal 10 bar. Im Heizrohr findet der Stoff- und Energieaustausch statt, wodurch der Impulsaustausch durch die Additiv-Schmelze weiter erhöht wird. In die Reduktions-Quenche wird Kohlenstaub mittels kaltem $CO_2$ als Trägergas eingebracht.

In der Reduktions-Quenche findet sofort die Boudouard-Reaktion statt:

$$C + CO_2 \rightarrow 2\ CO$$

welche durch den Energieeintrag von Schlackenschmelze und heißem Treibgas aktiviert wird.

Durch die Vergasungsreaktion (CO-Bildung) sowie die sofort einsetzende Reduktion des Schlacken-Eisenoxides fällt die Temperatur im Quenchraum schlagartig auf ca. 600° C, was zur "Micro-Granulation" sowie Metalleisen-Pulver-Bildung führt.

Die Schlacke (Pulver) hat dann die folgende Zusammensetzung:

| Endschlacke | |
|---|---|
| Komponente | (%) |
| Cao | 43 |
| MgO | 7,04 |
| $SiO_2$ | 33 |
| $Al_2O_3$ | 12,4 |
| S | 1,26 |
| $Cr_2O_3$ | 0,03 |
| $P_2O_5$ | 0,8 |

Bei dieser "wasserfreien" Verfahrensweise bleibt der Schwefel in der Schlacke eingebunden, wodurch sich zementtechnologische und ökologische Vorteile ergeben. Der $Cr_2O_3$-Gehalt mit ca 300 ppm ist hygienisch unbedenklich, er liegt unter der Zementnorm/Zement-Durchschnittswerte.

**Patentansprüche**

1. Verfahren zum Granulieren und Zerkleinern von flüssigen Schlacken insbesondere metalloxidhaltigen Schlacken wie z.B. Konverterschlacken oder Müllverbrennungsschlacken, dadurch gekennzeichnet, daß die flüssige Schlacke in einen Expansions-bzw. Granulierraum ausgestoßen wird, daß in die flüssige Schlacke bzw. den Schlackenstrahl Kohle, Kohlenwasserstoffe, $CO_2$-hältige Gase und/oder Kohle-Wassergemische bzw. Kohleschlämme eingestoßen und zumindest teilweise zu CO und $H_2$ umgesetzt werden, wobei die Schlackentröpfchen reduziert und gekühlt werden und daß das Staubgemisch aus Klinkerstaub bzw. Schlackenstaub und Metallstaub voneinander, beispielsweise durch Magnetscheidung, getrennt wird.

2. Verfahren nach Anspruch 1, dadurch gekennzeichnet, daß Kohlenwasserstoffe in Form eines Strahles aus Schwerölen, Dieselölen oder Altlösungsmitteln unter einem Druck von über 15 bar, insbesondere 30 bis 260 bar eingesetzt werden.

3. Verfahren nach Anspruch 1 oder 2, dadurch gekennzeichnet, daß Hochdruckwasser gemeinsam mit Kohlestaub oder Kohlenwasserstoffen in die flüssige Schlacke eingestoßen wird.

4. Verfahren nach Anspruch 1, 2 oder 3, dadurch gekennzeichnet, daß Kohlenwasserstoffe und/oder Kohle-Wassergemische koaxial mit dem Schlackenstrahl unter Ausbildung eines Schlackenmantels ausgestoßen werden.

5. Verfahren nach einem der Ansprüche 1 bis 4, dadurch gekennzeichnet, daß Wasserdampf oder $CO_2$ unter einem Druck von 3 bis 30 bar koaxial zur Mündung des Schlackenaustrittes eingestoßen wird und daß der Schlackenstrahl nach dem Verlassen der Mündung mit Kohlenstoffträgern, insbesondere Kohle und Druckwasser, beaufschlagt wird.

6. Verfahren nach einem der Ansprüche 1 bis 5, dadurch gekennzeichnet, daß der mit Schlacke ummantelte Strahl mit $O_2$, $CO_2$ und/oder $H_2O$ zur Ausbildung von CO und ggf. $H_2$ beaufschlagt wird und die granulierte Schlacke gemeinsam mit dem gebildeten CO und ggf. $H_2$ in den Mahlraum einer Strahl- oder Prallmühle eingebracht wird.

7. Verfahren nach einem der Ansprüche 1 bis 6, dadurch gekennzeichnet, daß die Schlacken auf eine Basizität ($CaO/SiO_2$) zwischen 0,2 und 3,8, insbesondere 2,8 bis 3,6 eingestellt bzw. mit dieser Basizität eingesetzt werden.

8. Verfahren nach einem der Ansprüche 1 bis 7, dadurch gekennzeichnet, daß überhitzter Wasserdampf mit Temperaturen von über 1200° C, insbesondere 1450° C, zum Zerstäuben der flüssigen Schlacken eingesetzt wird.

9. Verfahren nach einem der Ansprüche 1 bis 8, dadurch gekennzeichnet, daß die Reduktion der zerstäubten Schlacken bei Temperaturen von 600° bis 1600° C in der Wirbelschicht vorgenommen wird.

10. Verfahren nach einem der Ansprüche 1 bis 9, dadurch gekennzeichnet, daß die gekühlten Stäube unter inerter Atmosphäre auf unter 100° C abgekühlt werden.

11. Verfahren nach einem der Ansprüche 1 bis 10, dadurch gekennzeichnet, daß Kohlenstoff in einer Menge von 250 bis 300 kg/t Schlacke in den Kühlraum eingebracht wird.

12. Vorrichtung zur Durchführung des Verfahrens nach einem der Ansprüche 1 bis 11 mit einem Schlacken-Tundish und einer koaxial zur Achse des Tundish-Rohres angeordneten Lanze, dadurch gekennzeichnet, daß das Tundish-Rohr als Loch-Düse ausgebildet ist und daß radial außerhalb der Mündung des Tundish-Rohres Einrichtungen zum Aufbringen von Kohlenstoffträgern und/oder Wasserdüsen angeordnet sind.

FIG. 1

FIG. 2

FIG. 3

FIG. 4

**Europäisches Patentamt**

**EUROPÄISCHER RECHERCHENBERICHT**

Nummer der Anmeldung

EP 99 89 0207

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 195 22 320 C (DOUMET JOSEPH E) 22. August 1996 (1996-08-22) * Spalte 1, Zeile 63 - Spalte 2, Zeile 67; Ansprüche 1-19; Abbildungen 1,2 * --- | 1 | C21B3/08 B01J2/04 |
| A | FR 2 527 940 A (CIRM) 9. Dezember 1983 (1983-12-09) * Ansprüche 1-7 * --- | 2,5 | |
| A | WO 95 15402 A (HOLDERBANK FINANC GLARUS ;EDLINGER ALFRED (CH)) 8. Juni 1995 (1995-06-08) * Seite 5, Zeile 14 - Seite 6, Zeile 24; Ansprüche 1-9; Abbildung * --- | 1,3,4,12 | |
| A | EP 0 829 550 A (HOLDERBANK FINANC GLARUS) 18. März 1998 (1998-03-18) * das ganze Dokument * ----- | 1,7 | |

RECHERCHIERTE SACHGEBIETE (Int.Cl.7)

C21B
B01J
C22B

Der vorliegende Recherchenbericht wurde für alle Patentansprüche erstellt

| Recherchenort | Abschlußdatum der Recherche | Prüfer |
|---|---|---|
| BERLIN | 30. September 1999 | Cubas Alcaraz, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**ANHANG ZUM EUROPÄISCHEN RECHERCHENBERICHT**
**ÜBER DIE EUROPÄISCHE PATENTANMELDUNG NR.**　　　　EP 99 89 0207

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-1999

| Im Recherchenbericht angeführtes Patentdokument | Datum der Veröffentlichung | Mitglied(er) der Patentfamilie | | Datum der Veröffentlichung |
|---|---|---|---|---|
| DE 19522320 C | 22-08-1996 | BE | 1009703 A | 01-07-1997 |
| | | FR | 2735791 A | 27-12-1996 |
| | | GB | 2302397 A,B | 15-01-1997 |
| | | JP | 9013106 A | 14-01-1997 |
| | | US | 5820814 A | 13-10-1998 |
| FR 2527940 A | 09-12-1983 | KEINE | | |
| WO 9515402 A | 08-06-1995 | AT | 400140 B | 25-10-1995 |
| | | AT | 245893 A | 15-02-1995 |
| | | AU | 1057695 A | 19-06-1995 |
| | | EP | 0683824 A | 29-11-1995 |
| | | TR | 27905 A | 11-10-1995 |
| | | US | 5667147 A | 16-09-1997 |
| | | ZA | 9409263 A | 23-10-1995 |
| EP 0829550 A | 18-03-1998 | AT | 182631 T | 15-08-1999 |
| | | CA | 2215262 A | 17-03-1998 |
| | | DE | 59700282 D | 02-09-1999 |

Für nähere Einzelheiten zu diesem Anhang : siehe Amtsblatt des Europäischen Patentamts, Nr.12/82